# EUROPEAN PATENT SPECIFICATION

(11) **EP 0 600 364 B1**
(45) Date of publication and mention of the grant of the patent: **23.04.1997**
(21) Application number: 93118925.2
(22) Date of filing: 24.11.1993
(51) Int. Cl.: B60L 3/10

(54) **Inverter controlled induction motor driving system for electric rolling stock**
Umrichtergesteuertes Induktionsmotor-Antriebssystem für Elektrofahrzeuge
Système de commande de moteur à induction par onduleur pour matériel roulant

(30) Priority: 30.11.1992 JP 319706/92
(43) Date of publication of application: 08.06.1994
(73) Proprietor: HITACHI, LTD., Chiyoda-ku, Tokyo 101 (JP)
(72) Inventor: Kasai, Shoji, Katsuta-shi (JP); Nakamura, Kiyoshi, Katsuta-shi (JP); Hirotsu, Tetsuji, Katsuta-shi (JP)
(74) Representative: Strehl Schübel-Hopf Groening & Partner

(56) References cited:
- EP-A- 0 085 394
- EP-A- 0 486 996
- US-A- 4 327 313
- US-A- 4 335 337
- PATENT ABSTRACTS OF JAPAN, vol. 014, no. 395 (M-1016), 11 June 1990 & JP-A-02 151 203 (HITACHI LTD) 30 November 1988
- PATENT ABSTRACTS OF JAPAN, vol. 016, no. 374 (M-1293), 11 August 1992 & JP-A-04 121 004 (HITACHI LTD) 22 April 1992

## Description

### BACKGROUND OF THE INVENTION

### Field of the Invention

This invention relates to a driving system for the electric rolling stock which is driven by inverter-controlled induction motors, and particularly to a driving system capable of improving the adhesion performance.

### Description of the Related Art

JP-A-4-121004 disclosed one example of the driving system for the electric rolling stock which has two or more inverters provided for driving induction motors and which is driven to run by the inverter-controlled motors. In this driving system, there are provided a frequency control system which selects the minimum value of the rotating velocities of all induction motors upon power running and the maximum value upon regenerative braking, adds this selected value to a slip frequency instruction, and uses this sum as an inverter frequency instruction common to the inverters, and a current control system which feeds the maximum value of the currents in all motors back to the inverters, thereby controlling the output currents from the inverters.

In this prior art, when slip occurs in the driving axles of the electric rolling stock running on the rails, we can expect the effect of no need to execute the control (readhesion control) in which the torque of the motors is forced to be reduced so that the driving axles readhere to the rails. In the frequency control system, however, only the minimum or maximum of the rotating velocities of all motors is selected, and thus the driving system for each inverter is easy to be affected by the external disturbance from other inverter driving systems.

An inverter controlled induction motor driving system including the features of the preamble of claim 1 is known from EP-A-0 486 996. In this prior art system each inverter includes a common control unit for effecting linkage control of the inverters to carry out an optimum adhesion performance of the electric rolling stock. However, the document does not disclose how the linkage control is carried out.

From US-A-4 335 337 and EP-A-0 085 394 control systems are known in which a single inverter performs a speed control based on the maximum/minimum rotation speed of a plurality of induction motors.

### SUMMARY OF THE INVENTION

It is the object underlying the invention to provide an inverter control induction motor driving system for electric rolling stock which presents a stable control performance when the driving axles are slipped without being affected by external disturbance from the other driving systems.

This object is met by a system according to claim 1. Preferred embodiment are disclosed in the dependent claims.

In general, the induction motor has the same characteristic as the shunt characteristic of the DC motor. If the motor input frequency (inverter frequency) is kept constant, the slip frequency is decreased to reduce the torque when the wheel causes slip to approach a synchronous speed. Thus, the wheel is subjected to self readhesion even though readhesion control for reducing the torque is not forcibly made.

When the wheel (driving axle) has very small slip to rails rather than when it is completely adhesive thereto, the electric rolling stock can achieve the maximum tractive force. This very small slip state is called the creep region. In other words, the electric rolling stock such as motor cars and electric locomotives is desired to be driven in this creep region.

We now considers that the electric rolling stock utilizes the shunt characteristic of the induction motor, and is driven by making use of self readhesion. When the slip is expanded, the torque is reduced the more due to the shunt characteristic and brought back to the creep region. Thus, the electric rolling stock can be driven to run by a relatively large tractive force.

A maximum/minimum rotating velocity selecting unit is provided for each inverter so that the unit receives a signal representing a rotating velocity of a motor(s) controlled by the inverter and a signal obtained based on a rotating velocity(ies) of a motor(s) controlled by other inverter(s) and the self inverter can be controlled based on the output of the unit. Therefore, there is almost not the possibility that the control is made under a slip condition, self readhesion can be effectively used, and the chance of natural adhesion can be increased. In addition, the self feedback value of its own system is used as much as possible without selecting other system's feedback value in order to control the self inverter. Therefore, the driving system can be stabilized.

In other words, the minimum value upon power running or the maximum value upon braking is selected from the rotating velocity signal which is produced by the rotation of at least one motor that is controlled by the self inverter, and the rotating velocity signal which is produced on the basis of the rotating velocity of at least one motor that is controlled by at least another single inverter, and this selected signal is used as the motor rotating velocity for the frequency instruction to the self inverter. Therefore, the driving system for each inverter can make good control upon slip, and upon adhesion it is not easily affected by the external disturbance from the other systems.

Furthermore, even when a train is composed of a plurality of electric cars, each feedback current is normalized on the basis of the torque instruction which is peculiar to the train, and the maximum value thereof is corrected on the basis of the torque instruction and fed back to each inverter. Therefore, natural readhesion can be properly made.

### BRIEF DESCRIPTION OF THE DRAWINGS

Fig. 1 is a block diagram of the arrangement of a first embodiment of an inverter controlled induction motor driving system for electric rolling stock according to this invention;
Fig. 2 is a waveform diagram useful for explaining the operation of the embodiment of Fig. 1 at the time of wheel slip;
Fig. 3 is a block diagram of a main part of a second embodiment of the inverter controlled induction motor driving system for electric rolling stock according to this invention;
Fig. 4 is a block diagram of a main part of a third embodiment of the inverter controlled induction motor driving system for electric rolling stock according to this invention;
Fig. 5 shows one example of the train made up of cars, which has the inverter controlled induction motor driving system for electric rolling stock according to this invention; and
Fig. 6 is a block diagram of an example of the arrangement of the inverter controlled induction motor driving system for electric rolling stock according to this invention, which shows an application of the invention to an electric train made up of trains.

### DESCRIPTION OF PREFERRED EMBODIMENTS

Some embodiments of the inverter controlled induction motor driving system of the invention will be described with reference to the accompanying drawings. In each figure, like elements having the same function are identified by the same reference numerals, and will not be described.

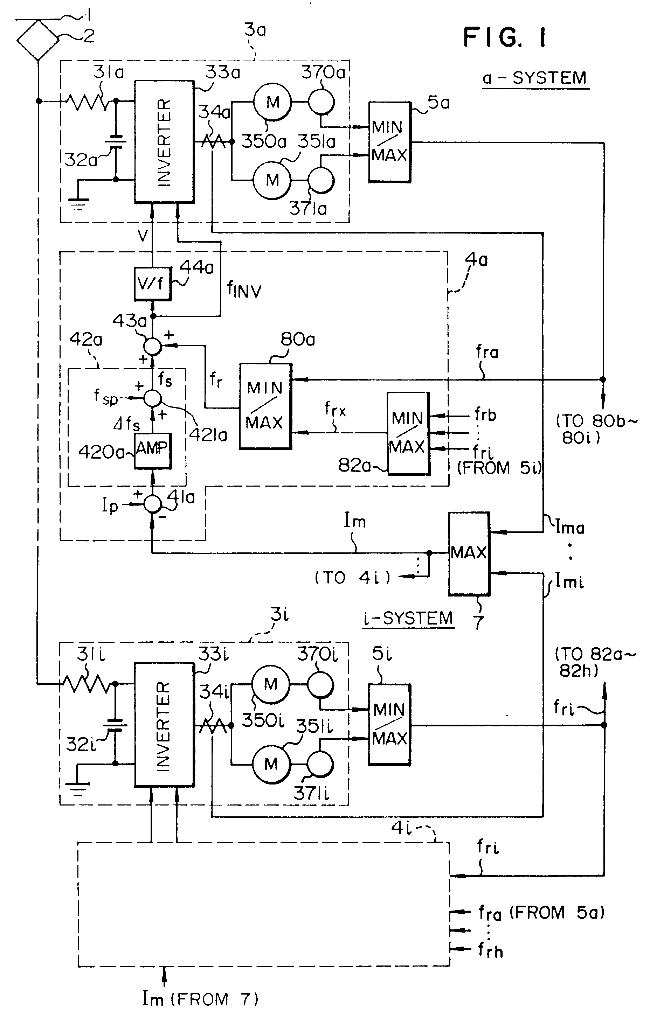

Fig. 1 is a block diagram of the arrangement of the first embodiment of the inverter controlled induction motor driving system for electric rolling stock according to this invention. In Fig. 1, the inverter controlling induction motor driving system for electric rolling stock is formed of a plurality of driving systems, for example, a-system to i-system. In the following figures, the suffixes a through i attached to the reference numerals of the elements indicate the a-driving system through i-driving system, respectively.

Referring to Fig. 1, a DC current from a stringing 1 is received by a pantograph 2 and fed therefrom to the electric rolling stock. This current is supplied through a filter circuit (a filter reactor 31a . . . 31i, a filter condenser 32a . . . 32i) which is provided in each driving system, to an inverter 33a . . . 33i of each driving system, respectively.

The inverter 33a . . . 33i produces a three-phase alternating current of a variable voltage and frequency on the basis of a voltage instruction and inverter frequency instruction which will be described later. This three-phase alternating current drives induction motors 350a and 351a . . . 350i and 351i which are connected in parallel with the inverter 33a . . . 33i, respectively.

These filter circuit, inverter and induction motors are included in a main circuit block 3a . . . 3i. This embodiment which is shown as the application to DC rolling stock may be used in an AC system in which an AC is supplied to and converted by a converter and then fed to the inverters as will be mentioned later. In addition, each inverter may be connected to the same pantograph. Also, the number of induction motors for driving each inverter is not limited to two but may be at least one.

There are also provided inverter controllers 4a . . . 4i for controlling the inverters. Each inverter controller includes a frequency controller for generating the inverter frequency instruction and a current controller for controlling the inverter output current. The inverter controller 4a, for example, will be described, and the other inverter controllers 4b . . . 4i will not be described because the arrangement and operation of the other inverter controllers are the same as those of the inverter controller 4a.

The rotating velocity values (which are also called the revolution rates or rotation frequencies) of the induction motors 350a, 351a are fed together to a rotating velocity selector 5a. This rotating velocity selector selects the minimum value when the electric rolling stock is in the power running state or the maximum value when it is in the braking state (regenerative), and thus produces a rotating velocity fra of system a. This rotating velocity is supplied to another rotating velocity selector 80a.

The rotating velocity selector 80a receives a rotating velocity frx uniquely obtained from another rotating velocity selector 82a which is supplied with rotating velocities frb . . . fri from the other systems (b-system . . . i-system), and the rotating velocity fra, and then it selects the minimum value of these input velocity values upon power running or the maximum value upon braking and produces a rotating velocity fr of a-system. The other-system rotating velocity selector 82a selects the minimum value of the rotating velocities frb . . . fri of the other systems (b-system . . . i-system) upon power running or the maximum value upon braking so as to produce the rotating velocity frx or averages the rotating velocities frb . . . fri.

These rotating velocity selectors 5a, 80a, 82a are controlled to select values from the input values upon power running and upon braking by a power-running/braking instruction fed from the outside.

The output current from the inverter 33a is detected by a current detector 34a, and the detected value is supplied as an a-system inverter output current Ima to a current selector 7 common to all systems. Similarly, the output currents from the other inverters are detected by current detectors 34b . . . 34i, and the detected values therefrom are supplied to the current selector 7.

The current selector 7 selects the maximum value of the input values and supplies it as a common inverter output current Im to the respective driving systems.

The rotating velocity fr and inverter output current Im are supplied to each driving system 4a . . . 4i.

The inverter output current Im in the a-system is compared with a current instruction (limiting current value) Ip at a comparator 41a of system-a, and the difference is supplied to a slip frequency instruction calculator 42a.

The slip frequency calculator 42a is formed of an amplifier 420a and an adder 421a. The current difference is supplied to the amplifier 420a, which then produces a slip frequency correction value Δ fs. This value is supplied to the adder 421a where it is added to a reference slip frequency instruction fsp to produce a positive slip frequency instruction fs upon power running or a negative slip frequency instruction fs upon regenerative braking.

The slip frequency instruction fs and the rotating velocity fr are added by an adder 43a, and the added result is supplied as an inverter frequency instruction fINV to the inverter 33a. This instruction fINV is also supplied to a multiplier 44a, where it is multiplied by a certain value V/f. The multiplied value is supplied as the voltage instruction V to the inverter 33a.

The inverter 33a responds to these instructions fINV and V to produce a pulse width modulated alternating current of a variable voltage and frequency.

The operation principle of this embodiment will be described below.

The slip/skid of electric rolling stock is generally controlled by the readhesion control which reduces the torque of the slip shaft to make readhesion. The drawback of this control is that each time slip occurs, the torque is forced to decrease (the slip frequency instruction fs is set to zero), thus the torque of all cars being reduced when slip frequently occurs. When a plurality of induction motors are controlled by a single inverter, the torque of the motor under an adhesion state is also reduced, thus making the problem serious.

Moreover, since the recent induction motors for electric railroad rolling stock generally have a low slip frequency (fs is about 1 Hz) because of small size/high efficiency, it is difficult to make readhesion control by controlling the very low frequency without reduction of tractive torque.

Thus, this embodiment utilizes the shunt characteristic of the induction motors in order to increase the chance of self readhesion as much as possible, thereby solving the above problem.

That is, in this embodiment, the output frequency of all inverters is calculated from the minimum value (upon power running) of the rotating velocities of the induction motors connected to all inverters, and also the maximum value of the output currents from all inverters is used as a feedback value in the current control systems of all inverters. Thus, the rotating velocity used in the control is sure to be the rotating velocity of the motor under an adhesion state, and the current feedback value is the output current of the inverter which controls the motor under an adhesion state.

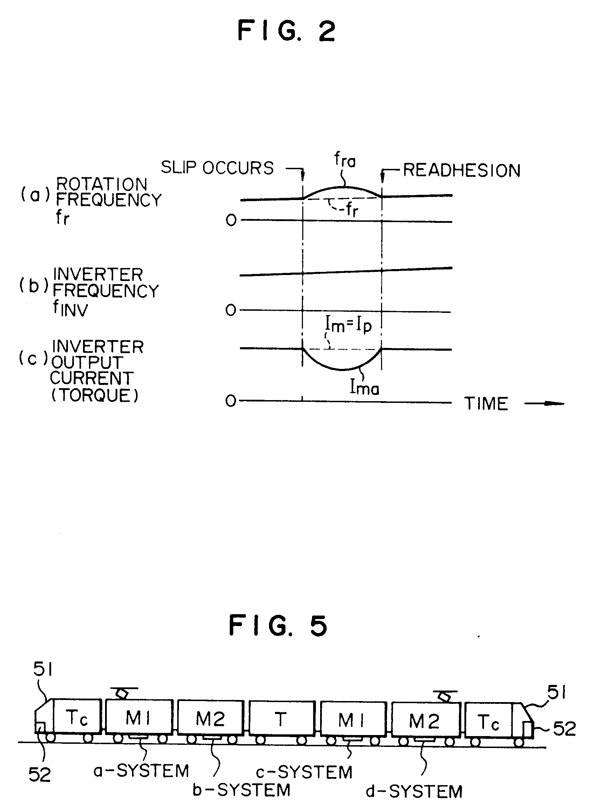

This will be mentioned with reference to Figs. 1 and 2.

It is now assumed that all the induction motors except the i-system motors, of the induction motors 350a, 351a . . . 350i, 351i shown in Fig.1 have caused slip. At this time, values of the i-system under an adhesion state are selected as the rotating velocity and inverter output current fed to the a-driving system . . . the h-driving system (not shown), or fr=fri, Im=Imi.

Referring to Fig. 2, the rotating velocity fra in the a-system in which slip occurred (also the velocities in the other systems, b-system . . . h-system except the i-system) increases with the slip velocity (see Fig. 2(a)), while the inverter output current Ima decreases (see Fig. 2(c)).

However, since the rotating velocity and inverter output current of the i-system with no slip are fed to the driving system 4a of a-system, the slip frequency instruction fs and inverter frequency instruction fINV are not changed by the slip of a-system. The inverter frequency instruction fINV is not increased to the acceleration of the electric rolling stock.

Therefore, as the rotating velocity fra rapidly approaches to the inverter frequency fINV, the slip frequency within the induction motor decreases. Thus, the generation torque of this induction motor is decreased so that the motor causes self readhesion at a creep speed (the other systems make the same operation).

The reason for the selection of the maximum value of the inverter output currents is that if the output current for driving the induction motor with slip is used as a feedback value for control, the current difference increases to increase the resulting slip frequency instruction so that the rate of increase of the inverter frequency instruction becomes larger than the acceleration of the electric rolling stock, thus causing the slip to be diverged.

According to this embodiment, since the values having no relation with slip can be selected from a plurality of rotating velocities and inverter output currents which are obtained from the respective driving systems, and can be supplied to the driving systems for the inverters, the chance of natural readhesion can be much increased except when it quite rarely occurs. As a result, the slip or skid velocity can be suppressed to be a very small value (creep velocity), and thus high adhesion running becomes possible.

Moreover, this embodiment is effective when a plurality of induction motors are driven by a single inverter. This is why when readhesion control is executed the torque of the non-slip motor is also reduced with the result that the torque for the single inverter is decreased. According to this embodiment, the slipping motor makes readhesion by itself, and the non-slip motor is supplied with the normal acceleration instruction, so that the torque in this driving system is not reduced. In addition, even though this driving system causes slip in all axles, it makes readhesion at the creep velocity and thus the torque is not much decreased as compared with the case of readhesion control.

The electric rolling stock with the driving system of this embodiment has the effect that the number of cars of which the train is made up can be reduced and that swift acceleration and deceleration and high speed running can be realized if the number of cars is kept constant.

Furthermore, according to this embodiment, the rotating velocity selectors 80a . . . 80i (not shown) are respectively provided in the inverter driving systems 4a . . . 4i, and each of the rotating velocity selectors 80a . . . 80i selects the minimum value or maximum value of the rotating velocities of the other selectors and its own rotating velocity, and uses it as its own rotating velocity fra . . . fri. Therefore, this embodiment has the effect that while the control upon slip can be kept in good conditions, the control upon adhesion is not easily affected by the external disturbance from other systems.

For example, when a train runs across the junctions of rails, the rotating velocity of driving axles becomes vibratile. In this case, as in the prior art, when the maximum value or minimum value is merely selected from the rotating velocities of the driving axles of all the systems and used as the rotating velocity of its own system, the selected minimum value or maximum value of the driving axles become vibratile each time each driving axle passes across a junction of rails. Thus, the vibratile minimum or maximum value of other systems is selected until all the train has completely passed across the junction, and hence there is an external disturbance from other driving systems. In this embodiment, however, since for example a function for averaging the input rotating velocities of other systems and a low-pass filter to which the input rotating velocities are supplied are provided in the other-system rotating velocity selectors 82a . . . 82i (not shown), the rotating velocity of its own system can be selected when the driving axles of its own system make adhesion. Therefore, the self driving system is affected only by the external disturbance caused when the driving axles of its own system pass across the junction, and is not easily affected by the external disturbance from the other systems.

In this embodiment, the inverter output current is detected because motor current detectors for three phases must be provided for each motor and thus are difficult to provide since the present current detectors are too large to be installed. If a current detector which is small enough to be installed is available, it may be used for detecting currents in each motor.

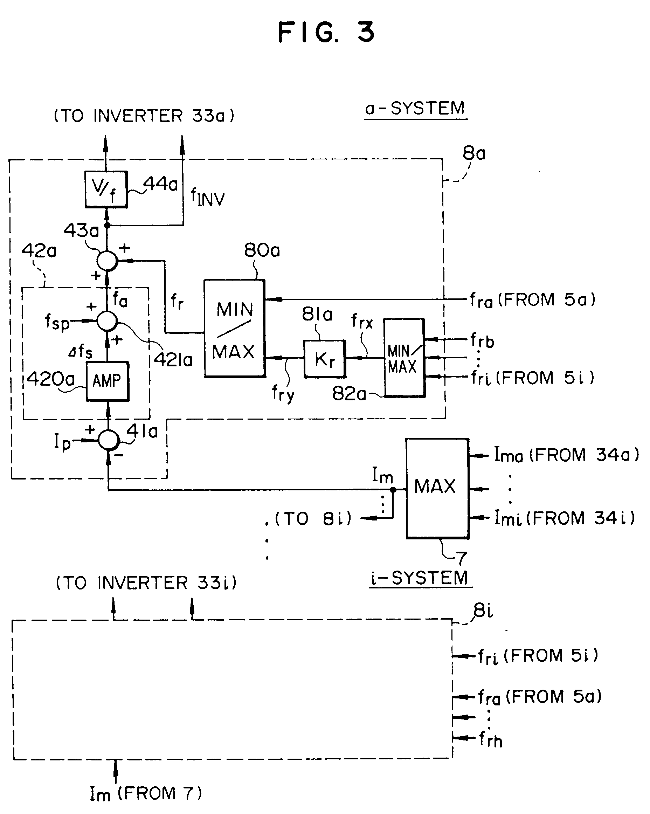

Fig. 3 is a block diagram of a main part of the second embodiment of the invention. In this figure, 8a . . . 8i indicate inverter driving systems of a-system . . . i-system.

The second embodiment is different from the first embodiment in the following points. A plurality of rotating velocities (signals) obtained from the other driving systems are supplied to the other-system rotating velocity selector 82a, by which a signal of the minimum rotating velocity is selected upon power running or a signal of the maximum rotating velocity is selected upon braking or an average value of the plurality of rotating velocities of the other systems is produced, as the signal frx. This output signal frx is supplied to a multiplier 81a, where it is multiplied by a coefficient Kr to produce a signal fry. This signal is supplied to the rotating velocity selector 80a of a-system, where it is compared with the rotating velocity fra obtained from its own system, or a-system so that the minimum rotating velocity upon power running or the maximum rotating velocity upon regenerative braking is selected as the rotation frequency signal fr.

The coefficient Kr used in the multiplier 81a is larger than 1, or Kr>1 upon power running or smaller than 1, or Kr<1 upon braking in accordance with the power-running/braking instruction fed from the outside. This coefficient Kr is determined by the creep characteristic between wheel and rail and the slip factor of induction motors. In other words, a rotating velocity of other system is selected so that it lies around the critical point between the creep velocity and slip (the same is also applied to the other systems).

Here, the coefficient Kr is in a range of 103% to 105% upon power running and in a range of 95% to 97% upon braking (regenerative), preferably. The coefficient Kr may be changed in accordance with the train velocity by taking differences in diameters of axles into consideration. In this case, more precise control can be made. Also, the coefficient Kr may be changed for each system.

According to this embodiment, when the wheels of this driving system are in an adhesion state, a control system is built up to use the rotating velocity fr which is based on the rotating velocity obtained from its own driving system, and thus stable frequency control can be made without any influence of the velocity fluctuation due to the roll or pitch of/among the cars of the train.

In addition, the rotating velocity fr is calculated on the basis of the rotating velocity of other driving system which is in a very small slip state and adhesion state upon slip/skid, and used to make frequency control on the inverter, so that the very small slip (creep velocity) is maintained.

Therefore, the chance of natural readhesion can be increased and thus high adhesion running can be realized.

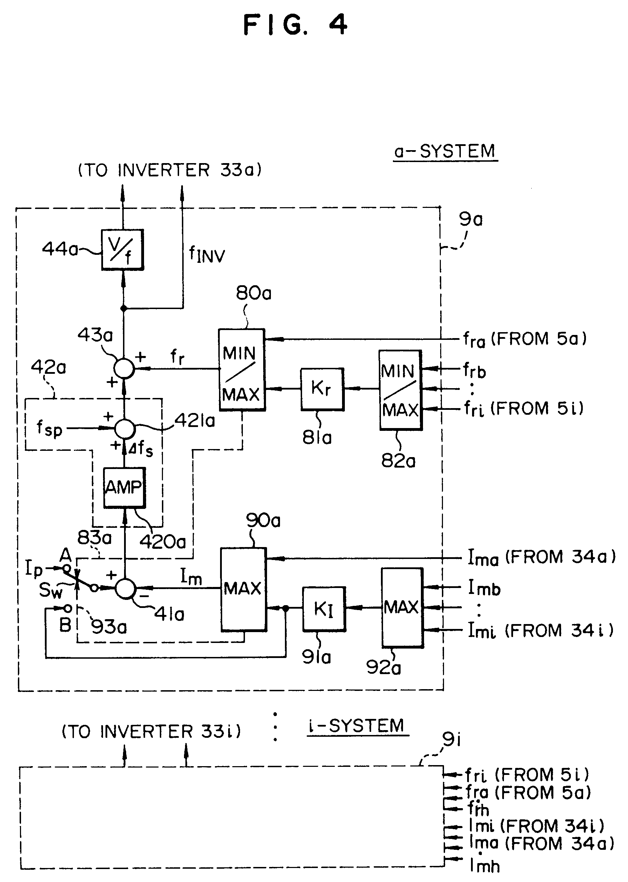

Fig. 4 is a block diagram of a main part of the third embodiment of the invention. In this figure, 9a . . . 9i represent driving systems for the respective inverters.

This embodiment is different from the second embodiment of Fig. 3 in the following points. In the second embodiment, the current selector 7 of substantially the same construction as the rotating velocity selector 80a, 82a is provided in each system. In the third embodiment, a switch Sw is provided in each system (for example, a-system) and responds to a signal from the rotating velocity selector 80a of its own system, and to a signal from a current selector 90a of its own system to select or not to select the current instruction Ip or not.

In other words, in place of the current selector 7 shown in Fig. 3, a selector 92a for the currents in the other systems, a multiplier 91a and the current selector 90a of a-system are used. The other-system current selector 92a calculates the maximum value or average value of a plurality of detected output currents from the other systems. The multiplier 91a multiplies the calculated output by a coefficient KI (KI<1) and supplies the multiplied output to the current selector 90a of a-system.

Here, the coefficient KI is preferably in a range of 95% to 97% (0.95 ∼ 0.97), and the coefficient KI may be changed in accordance with the train velocity as described later, and in this case, more precise control can be made. The coefficient KI may be changed for each system.

The current selector 90a compares the inverter output current Ima of its own system and the output from the multiplier 91a and produces a larger one as a current feedback signal Im which is used as the input signal to the current control system (the same is applied to the other systems).

Although the rotating velocity fr and inverter output current Im thus obtained can be directly used to achieve good effects, natural readhesion can be further accelerated as will be described below.

The input switch Sw is connected to the A-side position upon adhesion, and supplies the current instruction Ip to the comparator 41a.

When the current selector 90a selects a value of other system not of its own system, slip or skid occurs after the deviation from the creep velocity, and the input switch Sw responds to the signal 93a indicating this fact from the current selector 90a to be changed to the B-side position. Then, the same signal is supplied to the comparator 41a with the result that the output is zero. Thus, the slip frequency fs to be added to the rotating velocity fr becomes the reference slip frequency fsp.

When the rotating velocity selector 80a selects the rotating velocity fra of its own system, it is decided that adhesion is caused as a result of returning to the creep velocity, and the switch Sw responds to the signal indicating this fact from the selector 80a to be changed back to the A-side position.

Thus, upon slip the creep velocity can be returned to as soon as possible.

Since natural readhesion can be expected even upon slip/skid, the readhesion control for reducing the torque to zero is not performed (even in the second embodiment the reference slip frequency instruction fsp still remains). However, in this quite rare case, when all the driving axles of the train cause slip at the same time (when it runs on a steep slop upon snow though it is difficult to suppose this simultaneous slip), readhesion control must be executed.

The means for detecting the slip/skid of all the driving axles of the train, in the first embodiment shown in Fig. 1, can be realized by detecting that the rate of change of the rotating velocity fr from the rotating velocity selector 80a with respect to time, or dfr/dt has exceeded a predetermined value.

In the second embodiment shown in Fig. 3, this means can be realized by detecting that the rate of change of the output of the rotating velocity selector 80a . . . 80i of each driving system with respect to time has exceeded a predetermined value.

Moreover, this means can also be realized by detecting it on the basis of the difference between the rotating velocity fr and the rotating velocity of the non-driven wheel.

Thus, the reason why the rotating velocity for detecting the slip/skid is selected from all the rotating velocities is that the chance of self readhesion is given until the limit that the driving axles of all the train are simultaneously brought to the slip/skid state.

Immediately after the slip/skid of all axles is detected, the slip frequency instruction fs is reduced to zero, and the current control system is separated from the control, or the known readhesion control, is executed to make readhesion.

In the embodiments shown in Figs. 3 and 4, the multiplication by coefficient Kr, KI may be made by software without using the multiplier.

A description will be made of an application of any one of the first to third embodiments to an electric train which is made up of a plurality of cars.

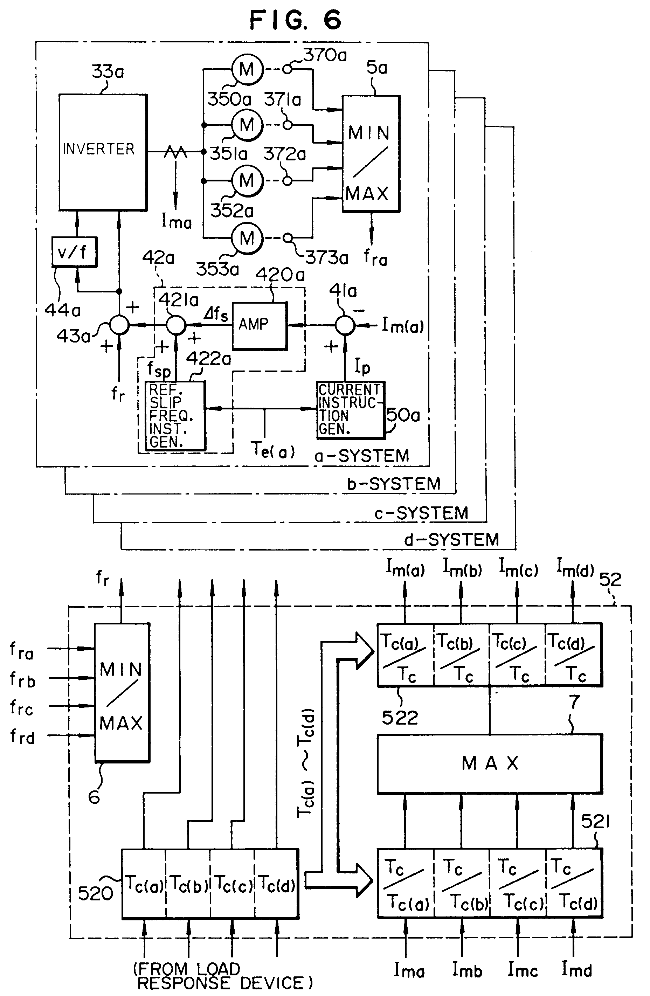

Fig. 5 shows the whole appearance of this train. The plurality of cars of the train include motor cars and trailers. The motor cars respectively have driving systems a, b, c and d each of which includes a combination of an inverter and a plurality of induction motors.

The rotating velocity signals fra . . . frd from the driving systems (a-system . . . d-system) and the inverter output currents Ima . . . Imd are detected and transmitted through a LAN (local area network) provided on the train to the rotating velocity selectors 80a . . . 80d, 82a . . . 82d and current selector 7 of a frequency/current information controller 52 which is provided in the motorman's seat 51 of, for example, a trailer Tc. The rotating velocity fr and feedback current Im selected by the selectors are supplied to the driving system for each inverter, controlling the inverter frequency fINV.

In this application, when the first embodiment is used, the current selector 7 is constructed to select the maximum current of the inverter output currents Ima . . . Imd as the feedback current Im. In place of this current selector 7, the self current selectors 90a . . . 90d, the other-system current selectors 92a . . . 92d and the multipliers 91a . . . 91d may be used as shown in Fig. 4. In this case, however, these selectors are respectively provided in the driving systems, and thus only the LAN on the train suffices for that purpose. When the second embodiment is used, the rotating velocity fr may be obtained by using the multipliers 81a . . . 81d.

Also, these selectors may be all provided on the motorman's seat.

The application of the first to third embodiment to the train of Fig. 5 will be described with reference to Fig. 6.

In this application, the frequency/current information controller 52 is supplied with the rotating velocities fra . . . frd and inverter output currents Ima . . . Imd, and with load response signals from load response devices (not shown) which are provided in the driving systems of a-system . . . d-system, respectively.

The rotating velocity selector 6 selects the minimum rotating velocity upon power running or the maximum rotating velocity upon braking so as to produce the rotating velocity fr. The current selector 7 selects the maximum current as the feedback current Im. These selectors may be constructed as in the embodiments shown in Figs. 3 and 4.

A torque commander 520 is responsive to the load response signals to calculate torque instructions Tc(a) . . . Tc(d) which are supplied to the driving systems of a-system . . . d-system.

The values of the torque instructions are decreased the more if the load response signal of the corresponding system is smaller than the reference value, or increased the more if the load response signal is larger than the reference value.

The torque instructions Tc(a) . . . Tc(d) thus calculated are supplied to current instruction generators 50a . . . 50d and reference slip frequency instruction generators 422a . . . 422d, respectively and also supplied to a current value corrector 521 and feedback current setting device 522.

The current value corrector 521 multiplies the inverter output currents Ima . . . Imd by the ratios of the reference torque instruction Tc to the torque instructions Tc(a) . . . Tc(d), or by Tc/Tc(a) . . . Tc/Tc(d) to calculate normalized inverter output currents, respectively, which are then supplied to the current selector 7.

The feedback current setting device 522 multiplies the maximum value from the current selector 7 by the ratios of the torque instructions Tc(a) . . . Tc(d) to the reference torque instruction Tc, or Tc(a)/Tc . . . Tc(d)/Tc so as to return to the feedback current values of the respective driving systems, which are then transmitted to the driving systems. The operation of each driving system has been described as above.

According to this application as another embodiment, since the current feedback values which will be obtained if no slip occurs are calculated in accordance with the torques produced from the respective driving systems and fed back to the driving systems, self readhesion can be properly executed even though slip occurs. Therefore, the expected adhesion coefficient of all the train can be increased.

By the way, the position and axle weight in the train can be considered as the factors for determining the torque instructions of the respective systems.

First, the position in the train will be described.

In general, the driving axle locating at the front ahead is easy to cause slip. Therefore, if the torque instruction value is set to increase with the increase of the distance of the driving axle from the head car, the expected adhesion coefficient of all the train is increased.

In addition, when the change of the length of the train, addition of cars to the train, detachment of cars from the train or the like is made, the torque instruction value is changed manually or by an automatic train number setting device or the like.

The axle weight will be described below.

The axle weight of cars at the front becomes light upon power running, and that at the back becomes light upon regenerative braking. Therefore, upon power running the axles of the front cars are easy to cause slip, and upon regenerative braking those of the back cars are easy to cause skid.

In this case, the torque instruction value to the front driving system is decreased upon power running but increased upon regenerative braking. The torque instruction value to the back driving system is increased upon power running but decreased upon regenerative braking. Thus, the expected adhesion coefficient of all the train is increased.

The torque instructions given above are combined by the torque commander 520 to produce torque instructions which have been separately weighted for the respective systems, and the current feedback values are set to match those values. Thus, the train can all be driven with high adhesion and thus swiftly decelerated or accelerated to a high speed.

Thus, according to this invention, the self readhesion characteristics which the induction motors have can be utilized as effectively as possible, and the chance of natural readhesion is increased. Therefore, the electric rolling stock can be driven to run with very small slip (in the creep region), or with high adhesion.

In addition, since the expected adhesion coefficient of all the train is increased, fast acceleration and deceleration driving can be realized.

## Claims

1. An inverter controlled induction motor driving system for electric rolling stock,
comprising a plurality of driving systems, each including a variable voltage variable frequency inverter (33a, ..., 33i) for driving induction motor means (350a, 351a, ..., 350i, 351i) and an inverter controller (4a, ..., 4i) for providing a frequency instruction (f_{INV}) and a voltage instruction (V) to the corresponding inverter by adding a motor rotating velocity (fᵣ) and slip frequency (fₛ),
characterised in that
each inverter controller (4a, ..., 4i) includes selecting means (80a) for selecting as said motor rotating velocity (fᵣ), the minimum, upon power running, or the maximum, upon braking, of a first rotating velocity signal (fᵣₐ) supplied from said corresponding induction motor means (350a, 351a) and of a second rotating velocity signal (fᵣₓ) based on the rotating velocity signals (f_{rb},...,fᵣᵢ) supplied from the induction motor means (350b, 351b, ..., 350i, 351i) of said other driving systems, and
said inverter controlled induction motor driving system further comprises current selector means (7; 90a, 91a, 92a) for providing said plurality of driving systems with a maximum current value (Iₘ) selected from the output current values (Iₘₐ, ..., Iₘᵢ) of the inverters of said driving systems,
wherein the slip frequency (fₛ) of each inverter controller (4a, ..., 4i) is calculated on the basis of said maximum current value (Iₘ).

2. The system according to claim 1, wherein each inverter controller (4a, ..., 4i) includes means (81a) for multiplying the second rotating velocity signal (fᵣₓ) by a first coefficient (Kᵣ).

3. The system according to claim 2, wherein said current selector means includes means (90a, 91a, 92a) corresponding to each inverter controller for multiplying said output current values (I_{mb}, ..., Iₘᵢ) of at least one of said other driving systems by a second coefficient (K_{I}).

4. The system according to claim 2 or 3, wherein said first coefficient (Kᵣ) is adapted to be changed for each inverter controller.

5. The system according to claim 3 or 4, wherein said second coefficient (K_{I}) is adapted to be changed for each inverter controller.

6. The system according to any of claims 1 to 5, wherein each inverter controller (4a, ..., 4i) includes means for producing said second rotating velocity signal (fᵣₓ) as an average value of the rotating velocity signals of said other driving systems.

7. The system according to any of claims 1 to 6, wherein said current selector means (7; 90a, 91a, 92a) including means for producing an average value of the output currents (I_{mb}, ..., Iₘᵢ) of said other driving systems.

## Patentansprüche

1. Umrichtergesteuertes Induktionsmotor-Antriebssystem für Elektrofahrzeuge mit
einer Vielzahl von Antriebssystemen, jedes einen Umrichter (33a, ... 33i) mit variabler Spannung und variabler Frequenz zum Antreiben einer Induktionsmotor-Einrichtung (350a, 351a, ...,305i, 351i) und eine Umrichter-Steuereinrichtung (4a, ..., 4i) zum Liefern einer Frequenzanweisung (f_{INV}) und einer Spannungsanweisung (V) an den zugehörigen Umrichter durch Addieren der Motordrehgeschwindigkeit (fᵣ) und der Schlupffrequenz (fₛ) aufweisend,
dadurch **gekennzeichnet**,
daß jede Umrichter-Steuereinrichtung (4a, ..., 4i) eine Wahleinrichtung (80a) zum Festlegen der Motordrehgeschwindigkeit (fᵣ), bei der Leistungsaufnahme auf das Minimum oder beim Bremsen auf das Maximum, aus einem ersten Drehgeschwindigkeitssignals (fᵣₐ), das von der zugehörigen Induktionsmotor-Einrichtung (350a, 351a) geliefert wird, und einem zweiten Drehgeschwindigkeitssignals (fᵣₓ) auf der Grundlage der Drehgeschwindigkeitssignale (f_{rb}, ..., fᵣᵢ), die von den Induktionsmotor-Einrichtungen (350b, 351b, ..., 350i, 351i) der anderen Antriebssysteme geliefert werden, aufweist, und
daß jedes Induktionsmotor-Antriebssystem weiter eine Stromwahleinrichtung (7; 90a, 91a, 92a) zum Versorgen der Vielzahl von Antriebssystemen mit einem maximalen Stromwert (Iₘ), der aus den Ausgabestromwerten (Iₘₐ, ..., Iₘᵢ) der Umrichter der Antriebssysteme ausgewählt wird, aufweist,
wobei die Schlupffrequenz (fₛ) jeder Umrichtersteuereinrichtung (4a, ..., 4i) auf der Grundlage des maximalen Stromwerts (Iₘ ) berechnet wird.

2. System gemäß Anspruch 1, wobei jede Umrichter-Steuereinrichtung (4a, ..., 4i) eine Einrichtung (81a) zum Multiplizieren des zweiten Drehgeschwindigkeitssignals (fᵣₓ) mit einem ersten Koeffizient (Kᵣ) aufweist.

3. System gemäß Anspruch 2, wobei die Stromwahleinrichtung eine zu jeder Umrichter-Steuereinrichtung gehörende Einrichtung (90a, 91a, 92a) zum Multiplizieren der Ausgangsstromwerte (I_{mb}, ..., Iₘᵢ) von wenigstens einem der anderen Antriebssysteme mit einem zweiten Koeffizienten (K_{I}) aufweist.

4. System gemäß Anspruch 2 oder 3, wobei sich der erste Koeffizient (Kᵣ) für jede Umrichter-Steuereinrichtung ändern läßt.

5. System gemäß Anspruch 3 oder 4, wobei sich der zweite Koeffizient (K_{I}) für jede Umrichter-Steuereinrichtung ändern läßt.

6. System gemäß einem der Ansprüche 1 bis 5, wobei jede Umrichter-Steuereinrichtung (4a, ..., 4i) eine Einrichtung zum Erzeugen des zweiten Drehgeschwindigkeitssignals (fᵣₓ) als Durchschnittsgeschwindigkeit der Drehgeschwindigkeitssignale der anderen Antriebssysteme aufweist.

7. System gemäß einem der Ansprüche 1 bis 6, wobei die Stromwahleinrichtung (7; 90a, 91a, 92a) eine Einrichtung zum Erzeugen eines Durchschnittswertes aus den Ausgangsströmen (I_{mb}, ..., iₘᵢ) der anderen Antriebssysteme aufweist.

## Revendications

1. Système d'entraînement de moteur à induction commandé par onduleur pour matériel roulant électrique,
comportant une pluralité de systèmes d'entraînement, comprenant chacun un onduleur (33a, ..., 33i) à tension variable et fréquence variable pour commander des moyens formant moteurs à induction (350A, 351A, ...,350&, 351i) et un régulateur (4a, ..., 4i) d'onduleur pour fournir une instruction de fréquence (f_{INV)}) et une instruction de tension (V) à un onduleur correspondant en ajoutant une vitesse de rotation (fᵣ) de moteur et une fréquence de glissement (fₛ),
caractérisé en ce que
chaque régulateur (4a, ..., 4i) d'onduleur comporte un moyen de sélection (80a) pour sélectionner comme dite vitesse de rotation (fᵣ) du moteur, le minimum, lors de la marche en charge, ou le maximum, lors du freinage, d'un premier signal (fᵣₐ) de vitesse de rotation fourni par ledit moyen formant moteur à induction correspondant (350a, 351a) et d'un second signal (fᵣₓ) de vitesse de rotation basé sur les signaux (f_{rb/.../}fᵣᵢ) de vitesse de rotation fournis par les moyens formant moteurs à induction (350b, 351b, ..., 350i, 351i) desdits autres systèmes d'entraînement, et
ledit système d'entraînement de moteur à induction commandé par onduleur comporte en outre un moyen formant sélecteur de courant (7 ; 90a, 91a, 92a) pour fournir à ladite pluralité de systèmes d'entraînement un courant à intensité maximale (Iₘ) sélectionnée par les intensités (Iₘₐ, ..., Iₘᵢ) de courant de sortie des onduleurs desdits systèmes d'entraînement,
la fréquence de glissement (ₛ) de chaque régulateur (4a, ..., 4i) d'onduleur étant calculée sur la base de ladite intensité maximale (Iₘ) du courant.

2. Système selon la revendication 1, dans lequel chaque régulateur (4a, ..., 4i) d'onduleur comporte un moyen (81a) pour multiplier le second signal (fᵣₓ) de vitesse de rotation par un premier coefficient (Kᵣ).

3. Système selon la revendication 2, dans lequel ledit moyen formant sélecteur de courant comprend un moyen (90a, 91a, 92a) correspondant à chaque régulateur d'onduleur pour multiplier lesdites intensités (I_{mb}, ..., Iₘᵢ) du courant de sortie d'au moins un desdits autres systèmes d'entraînement par un second coefficient (K_{I}).

4. Système selon la revendication 2 ou 3, dans lequel ledit premier coefficient (Kᵣ) est apte à être modifié pour chaque régulateur d'onduleur.

5. Système selon la revendication 3 ou 4, dans lequel ledit second coefficient (K_{I}) est apte à être modifié pour chaque régulateur d'onduleur.

6. Système selon l'une quelconque des revendications 1 à 5, dans lequel chaque régulateur (4a, ..., 4i) d'onduleur comporte un moyen pour produire ledit second signal (fᵣₓ) de vitesse de rotation comme valeur moyenne des signaux de vitesse de rotation desdits autres systèmes d'entraînement.

7. Système selon l'une quelconque des revendications 1 à 6, dans lequel ledit moyen formant sélecteur de courant (7 ; 90a, 91a, 92a) comporte un moyen pour produire une valeur moyenne d'intensité des courants de sortie (I_{mb}, ..., Iₘᵢ) desdits autres systèmes d'entraînement.
